# EUROPEAN PATENT APPLICATION

(11) **EP 4 429 317 A1**
(43) Date of publication of application: **11.09.2024**
(21) Application number: 21963307.0
(22) Date of filing: 05.11.2021
(51) Int. Cl.: H04W 24/10, H04W 72/04, H04W 72/12, H04W 28/04, H04W 28/06

(54) **TERMINAL, WIRELESS COMMUNICATION SYSTEM, AND WIRELESS COMMUNICATION METHOD**

(71) Applicant: NTT DOCOMO, INC., Tokyo 100-6150 (JP)
(72) Inventor: SHIBAIKE Naoya, Tokyo 100-6150 (JP); HARADA Hiroki, Tokyo 100-6150 (JP); NAGATA Satoshi, Tokyo 100-6150 (JP); PI Qiping, Beijing 100190 (CN); WANG Jing, Beijing 100190 (CN); CHEN Lan, Beijing 100190 (CN)
(74) Representative: Hoffmann Eitle
(86) International application number: PCT/JP2021/040892
(87) International publication number: WO 2023/079713

(57) **Abstract**

A terminal receives a plurality of downlink data channels scheduled by a single downlink control information, and assumes that the downlink data channel canceled due to the collision is excluded from a specific scheduling target when any of downlink data channels collides with an uplink symbol.

## Description

### TECHNICAL FIELD

The present disclosure relates to a terminal, radio communication system and radio communication method corresponding to multi-PDSCH/PUSCH scheduling.

### BACKGROUND ART

The 3rd Generation Partnership Project (3GPP) has specified the 5th generation mobile communication system (also called 5G, New Radio (NR) or Next Generation (NG)) and is also promoting the specification of the next generation called Beyond 5G, 5G Evolution or 6G.

For example, Release-17 of 3GPP supports a frequency band grater 52.6 GHz and up to 71 GHz, and one (single) downlink control information (DCI) enables multi-PDSCH/PUSCH scheduling for multiple data channels, specifically multiple Physical Downlink Shared Channels (PDSCH)/Physical Uplink Shared Channels (PUSCH) (Non-Patent document 1) .

Multi-PDSCH scheduling allows a collision (an allocation of overlapping radio resources) with a semi-static uplink (UL) symbol (for Time Division Duplex: TDD). Multi-PUSCH scheduling also allows a collision with a semi-static downlink (DL) symbol.

### CITATION LIST

### NON-PATENT LITERATURE

Non-Patent Literature 1: "Final Report of 3GPP TSG RAN WG1 #104bis-e v 1.0.0," R1-2104151, 3GPP TSG RAN WG1 Meeting #105-e, 3GPP, April 2021

### SUMMARY OF THE INVENTION

However, if the collision between the PDSCH/PUSCH and the UL/DL symbol as described above is allowed, the terminal (User Equipment, UE) needs to continue receiving the data channel normally even if a collision occurs.

Thus, the following disclosure has been made in view of this situation, and is intended to provide a terminal, a radio communication system, and a radio communication method capable of normally continuing reception of a data channel even if a collision between the PDSCH/PUSCH and the UL/DL symbol is permitted.

An aspect of the present disclosure is a terminal (UE 200) including a reception unit (data transmission/reception unit 260) that receives a plurality of downlink data channels scheduled by a single downlink control information, and a control unit (control unit 270) that assumes that the downlink data channel cancelled due to the collision is excluded from a specified scheduling target when any of the downlink data channels collides with an uplink symbol.

An aspect of the present disclosure is a terminal including a reception unit that receives a plurality of downlink data channels scheduled by a single downlink control information, and a control unit that determines the presence or absence of information related to a code block group based on the scheduled downlink data channels or the valid downlink data channels.

An aspect of the present disclosure is a terminal including a reception unit that receives a plurality of downlink data channels scheduled by a single downlink control information, and a control unit that determines a codebook including a feedback of an automatic retransmission request of the downlink data channels based on the number of the valid downlink data channels.

An aspect of the present disclosure is a terminal including a reception unit that receives a plurality of downlink data channels scheduled by a single downlink control information, and a control unit that assumes that reception of the downlink data channels by semi-static scheduling cancelled due to the collision when any of the downlink data channels collides with an uplink symbol.

An aspect of the present disclosure is a terminal (UE 200) including a transmission unit (data transmission and reception unit 260) that transmits a plurality of uplink data channels scheduled by a single downlink control information, and a control unit (control unit 270) that assumes that the uplink data channel cancelled due to the collision is excluded from the specified scheduling target when any of the uplink data channels collides with a downlink symbol.

An aspect of the present disclosure is a terminal including a transmission unit that transmits a plurality of uplink data channels scheduled by a single downlink control information, and a control unit that determines reporting of channel status information based on the scheduled uplink data channels or the valid uplink data channels.

An aspect of the present disclosure is a terminal including a transmission unit that transmits a plurality of uplink data channels scheduled by a single downlink control information, and a control unit that determines the presence or absence of information about a code block group, based on the scheduled uplink data channels or valid uplink data channels.

An aspect of the present disclosure is a terminal including a transmission unit that transmits a plurality of uplink data channels scheduled by a single downlink control information, and a control unit that stops transmission of the uplink data channels by a configured grant canceled due to the collision when any of the uplink data channels collides with a downlink symbol.

### BRIEF DESCRIPTION OF THE DRAWINGS

[FIG. 1] FIG. 1 is an overall schematic configuration diagram of a radio communication system 10.
[FIG. 2] FIG. 2 is a diagram showing a frequency band used in the radio communication system 10.
[FIG.3] FIG. 3 is a diagram showing a configuration example of a radio frame, a sub-frame and a slot used in the radio communication system 10.
[FIG. 4] FIG. 4 is a functional block diagram of the gNB 100 and the UE 200.
[FIG. 5] FIG. 5 shows a configuration example of multi-PDSCH/PUSCH scheduling.
[Figure 6] FIG. 6 is a diagram showing a sequence example related to scheduling of a data channel.
[FIG. 7] FIG. 7 is a diagram showing an example of a TDRA table.
[FIG. 8] FIG. 8 is a diagram showing an example of a hardware configuration of the gNB 100 and the UE 200.
[FIG. 9] FIG. 9 shows a configuration example of a vehicle 2001.

### DESCRIPTION OF EMBODIMENTS

Hereinafter, the embodiment will be described based on the drawings. The same functions and structures are denoted by the same or similar reference numerals, and the description thereof will be omitted as appropriate.

### (1) Overall schematic configuration of the radio communication system

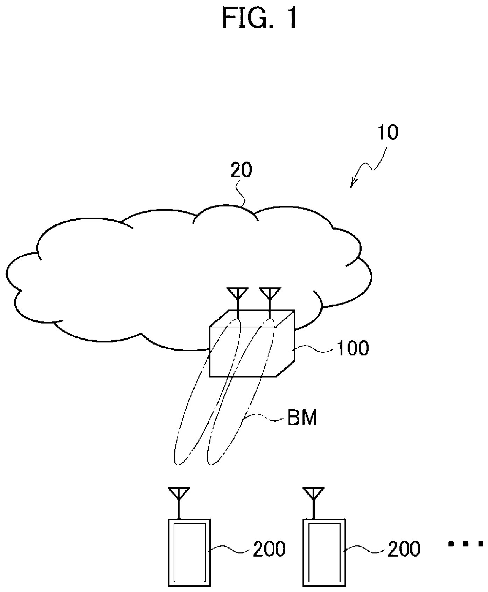

FIG. 1 is an overall schematic configuration diagram of a radio communication system 10 according to the present embodiment. The radio communication system 10 is a radio communication system in accordance with 5G New Radio (NR) and includes a Next Generation-Radio Access Network 20 (hereinafter referred to as NG-RAN 20 and a terminal 200 (UE 200, User Equipment, UE). The radio communication system 10 may be a radio communication system in accordance with a system called Beyond 5G, 5G Evolution or 6G.

The NG-RAN 20 includes a radio base station 100 (gNB 100). A specific configuration of the radio communication system 10 including the number of gNBs and UEs is not limited to an example shown in FIG. 1.

The NG-RAN 20 actually includes a plurality of NG-RAN nodes, specifically, a gNB (or ng-eNB), connected to a core network (5GC, not shown) in accordance with 5G. The NG-RAN 20 and the 5GC may be expressed simply as a "network".

The gNB 100 is a radio base station in accordance with 5G and executes radio communication in accordance with the UE 200 and 5G. The gNB 100 and the UE 200 can support Massive MIMO (Multiple-Input Multiple-Output), which generates a more directional antenna beam (Beam BM) by controlling radio signals transmitted from multiple antenna elements; Carrier Aggregation (CA), which uses multiple component carriers (CCs) bundled together; and Dual Connectivity (DC), which simultaneously communicates between the UE and each of two NG-RAN Nodes.

The gNB 100 can transmit multiple beams BM with different transmission directions (which may be referred to simply as a direction or radial direction, coverage, and the like) in space and time division. The gNB 100 may transmit multiple beams BM simultaneously.

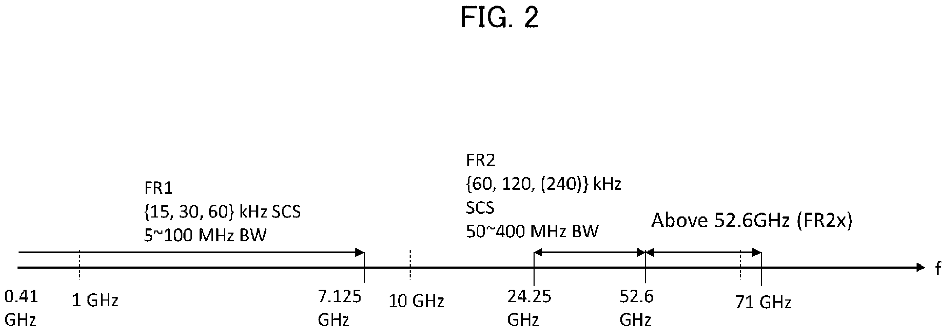

Further, the radio communication system 10 may support a plurality of frequency ranges (FRs). FIG. 2 shows frequency bands used in the radio communication system 10.

- FR1: 410 MHz to 7.125 GHz
- FR2: 24.25 GHz to 52.6 GHz

FR1 may use sub-carrier spacing (SCS) of 15, 30 or 60 kHz and may use a bandwidth (BW) of 5 to 100 MHz. FR2 has a frequency higher than FR1 and may use sub-carrier spacing (SCS) of 60 or 120 kHz (which may include 240 kHz) and may use a bandwidth (BW) of 50 to 400 MHz.

The SCS may be interpreted as numerology. The numerology is defined in 3GPP TS38.300 and corresponds to one subcarrier interval in a frequency domain.

In addition, the radio communication system 10 supports a higher frequency band than the frequency band of the FR2. Specifically, the radio communication system 10 supports a frequency band greater than 52.6 GHz and up to 71 GHz. Such a high frequency band may be referred to as "FR 2 x" for convenience.

To solve such problems, a cyclic prefix-orthogonal frequency division multiplexing (CP-OFDM)/discrete Fourier transform-spread (DFT-S-OFDM) with larger sub-carrier spacing (SCS) may be applied when a band greater than 52.6 GHz is used.

In addition, in a high frequency band such as FR2x, an increase in phase noise between carriers becomes a problem, as described above. Therefore, a larger (wider) SCS or application of a single carrier waveform may be required.

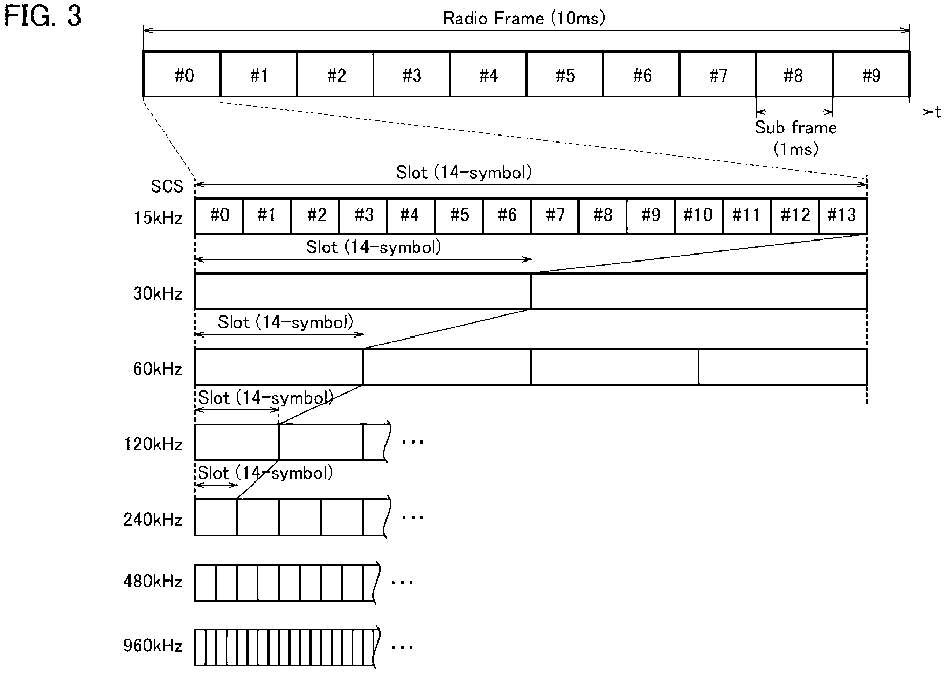

The larger the SCS, the shorter the symbol/CP (cyclic prefix) period and the slot period (if the 14 symbol/slot configuration is maintained). FIG. 3 shows an example of a configuration of a radio frame, a sub-frame and a slot used in the radio communication system 10. Table 1 shows the relationship between the SCS and a symbol period.

**[Table 1]**

| SCS | 15 kHz | 30 kHz | 60 kHz | 120 kHz | 240 kHz | 480 kHz | 960 kHz |
|---|---|---|---|---|---|---|---|
| Symbol Period (unit: µs) | 66.6 | 33.3 | 16.65 | 8.325 | 4.1625 | 2.08125 | 1.040625 |

As shown in Table 1, when a configuration of 14 symbols/slots is maintained, the larger (wider) the SCS, the shorter the symbol period (and slot period). It is noted that the symbol period may be referred to as a symbol length, time direction or time region. Further, a frequency direction may be referred to as a frequency region, resource block, subcarrier, bandwidth part (BWP) and the like.

Note that the number of symbols constituting one slot does not necessarily have to be 14 symbols (for example, 28, 56 symbols). The number of slots per subframe may vary depending on the SCS.

In the radio communication system 10, an SSB (SS/PBCH Block) composed of a synchronization signal (SS) and a physical broadcast channel (PBCH) may be used.

The SSB is transmitted periodically from a network mainly for the UE 200 to perform cell ID and reception timing detection at a start of communication. In the NR, the SSB is also used for a reception quality measurement of each cell. A transmission period (periodicity) of the SSB may be defined as 5, 10, 20, 40, 80, 160 milliseconds and the like. The UE 200 of an initial access may be assumed to have a transmission period of 20 milliseconds.

The network (NG-RAN20) may notify the UE 200 of the index display (ssb-PositionsInBurst) of the SSB actually transmitted by system information (SIB1) or radio resource control layer (RRC) signaling.

The SS is composed of a primary synchronization signal (PSS) and a secondary synchronization signal (SSS).

The PSS is a first known signal that the UE 200 attempts to detect in a cell search procedure. The SSS is a known signal that is transmitted to detect a physical cell ID in the cell search procedure.

The PBCH includes information necessary for the UE 200 to establish frame synchronization with a NR cell formed by the gNB 100 after detecting SS/PBCH Blocks, such as a system frame number (SFN) and an index for identifying symbol positions of multiple SS/PBCH Blocks within a half frame (5 ms).

Further, the PBCH may include system parameters necessary for receiving system information (SIB). Furthermore, the SSB includes a reference signal (DMRS for PBCH) for broadcast channel demodulation. The DMRS for PBCH is a known signal transmitted to measure the radio channel state for PBCH demodulation.

If a UE 200 determines, based on a received Master Information Block (MIB), that there is a CORESET for the Type0-PDCCH CSS, the UE 200 determines several contiguous resource blocks (RBs) and symbols for the CORESET (which may be referred to as a CORESET 0 or Remaining Minimum System Information (RMSI) CORESET). The UE 200 sets a Physical Downlink Control Channel (PDCCH), specifically a Monitoring Opportunity (MO) of Type 0 PDCCH for decoding of a System Information Block (SIB), based on the determined RBs and symbols.

The CORESET 0 is a special CORESET that is different from a normal CORESET. Such a particular CORESET may be interpreted as a CORESET that sends a PDCCH for scheduling the SIB 1. The CORESET 0 cannot be specified by the RRC since it is used before a RRC signaling is sent.

The RMSI may be interpreted as meaning a System Information Block 1 (SIB1). The RMSI may be composed of system information that a device (UE 200) has to be notified of before accessing a system. The SIB1 may be broadcast periodically throughout the cell at all times. SIB1 may provide the information required by the UE 200 to perform a first random access (RA).

The SIB1 is provided by a transmission of a regular Physical Downlink Shared Channel (PDSCH) scheduled with a period of 160 milliseconds. The PBCH/MIB may provide information concerning the numerology used for a SIB1 transmission and the CORESET corresponding to the search space used for scheduling SIB1. Within the CORESET, the UE 200 may monitor scheduling of SIB1 as indicated by a special System Information RNTI (SI-RNTI).

The radio communication system 10 may support Time Domain Resource Allocation (TDRA). The TDRA may be interpreted as a resource allocation in the time domain of Physical Uplink Shared Channel (PUSCH) as specified in 3GPP TS38.214. The TDRA of PUSCH may be interpreted as specified by an Information Element (IE) of the Radio Resource Control Layer (RRC), specifically PDSCH-Config or PDSCH-ConfigCommon.

The TDRA may be interpreted as resource allocation in the time domain of PUSCH specified by Downlink Control Information (DCI).

Further, in the radio communication system 10, one (single) DCI may support multiple data channels, specifically, multiple Physical Downlink Shared Channel (PDSCH)/Physical Uplink Shared Channel (PUSCH) scheduling (multi-PDSCH/PUSCH scheduling).

### (2) Function block configuration of radio communication system

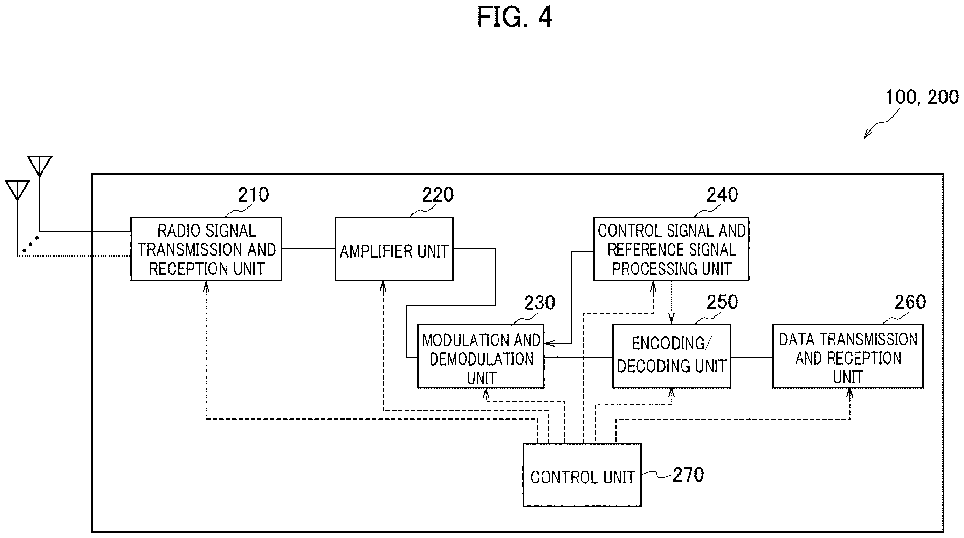

Next, a function block configuration of the radio communication system 10 will be described. Specifically, the function block configuration of the UE 200 will be described. FIG. 4 is a functional block diagram of the gNB 100 and the UE 200.

As shown in FIG. 4, the UE 200 includes a radio signal transmission and reception unit 210, an amplifier unit 220, a modulation and demodulation unit 230, a control signal and reference signal processing unit 240, an encoding/decoding unit 250, a data transmission and reception unit 260, and a control unit 270.

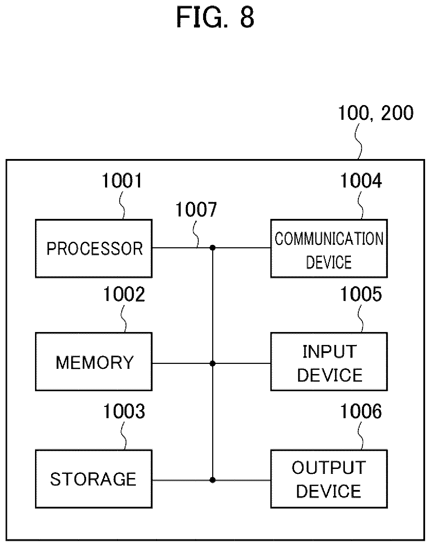

It should be noted that in FIG. 4, only the main function blocks related to the description of the embodiment are shown, and the UE 200 (gNB 100) has other function blocks (for example, a power supply unit) . Further, FIG. 4 shows a functional block configuration of the UE 200. Refer to FIG. 8 for a hardware configuration.

The radio signal transmission and reception unit 210 transmits/receives radio signals in accordance with the NR. By controlling radio (RF) signals transmitted from a plurality of antenna elements, the radio signal transmitting and receiving unit 210 can support Massive MIMO, which generates a beam with higher directivity, carrier aggregation (CA), which uses a plurality of component carriers (CCs) bundled together, and dual connectivity (DC), which simultaneously communicates between a UE and two NG-RAN nodes.

The amplifier unit 220 is composed of a Power Amplifier (PA)/ Low Noise Amplifier (LNA) and the like. The amplifier unit 220 amplifies a signal output from the modulation and demodulation unit 230 to a predetermined power level. Further, the amplifier unit 220 amplifies an RF signal output from the radio signal transmission and reception unit 210.

The modulation and demodulation unit 230 executes data modulation/demodulation, transmission power setting, resource block allocation, and the like for each predetermined communication destination (such as gNB 100). Cyclic Prefix-Orthogonal Frequency Division Multiplexing (CP-OFDM)/Discrete Fourier Transform-Spread (DFT-S-OFDM) may be applied to the modulation and demodulation unit 230. DFT-S-OFDM may be used not only for the uplink (UL) but also for the downlink (DL).

The control signal and reference signal processing unit 240 executes processing related to various control signals transmitted/received by the UE 200 and various reference signals transmitted/received by the UE 200.

Specifically, the control signal and reference signal processing unit 240 receives various control signals transmitted from the gNB100 via a predetermined control channel, for example, control signals of the radio resource control layer (RRC). Further, the control signal and reference signal processing unit 240 transmits various control signals to the gNB100 via a predetermined control channel.

The control signal and reference signal processing unit 240 executes processing using a reference signal (RS) such as a demodulation reference signal (DMRS) and a phase tracking reference signal (PTRS).

The DMRS is a reference signal (pilot signal) of each terminal known between a base station and a terminal for estimating a fading channel used for data demodulation. The PTRS is a reference signal of each terminal for estimating phase noise, which becomes a problem in a high frequency band.

In addition to the DMRS and the PTRS, the reference signal may include a Channel State Information-Reference Signal (CSI-RS), a Sounding Reference Signal (SRS), and a Positioning Reference Signal (PRS) for position information.

Further, the channel includes a control channel and a data channel. The control channels may include Physical Downlink Control Channel (PDCCH), Physical Uplink Control Channel (PUCCH), Random Access Channel (RACH: Downlink Control Information (DCI) including Random Access Radio Network Temporary Identifier (RA-RNTI)), Physical Broadcast Channel (PBCH) and the like.

Further, the data channels may include PDSCH (Physical Downlink Shared Channel), PUSCH (Physical Uplink Shared Channel), and the like. Data may mean data transmitted over a data channel.

Furthermore, the control signal and reference signal processing unit 240 may transmit capability information of a UE 200 for scheduling of the data channel to a network.

Specifically, the control signal and reference signal processing unit 240 may transmit UE capability information for scheduling PDSCH and PUSCH to the gNB 100. The details of UE capability information will be described below.

The encoding/decoding unit 250 performs data division/concatenation and channel encoding/decoding for each predetermined communication destination (gNB 100 or other gNB).

Specifically, the encoding/decoding unit 250 divides the data output from the data transmission and reception unit 260 into predetermined sizes and excludes channel coding for the divided data. Further, the encoding/decoding unit 250 decodes the data output from the modulation and demodulation unit 230 and concatenates the decoded data.

The data transmission and reception unit 260 executes transmission/reception of a protocol data unit (PDU) and a service data unit (SDU). Specifically, the data transmission and reception unit 260 executes assembly/disassembly of the PDU/SDU in a plurality of layers (media access control layer (MAC), radio link control layer (RLC), packet data convergence protocol layer (PDCP), and the like). Further, the data transmission and reception unit 260 executes error correction and retransmission control of the data based on Hybrid ARQ (Automatic Repeat Request).

The data transmission and reception unit 260 can receive a plurality of downlink data channels (PDSCH) scheduled by one (single) downlink control information (DCI). Further, the data transmission and reception unit 260 can transmit a plurality of uplink data channels (uplink data channels) scheduled by a single downlink control information (DCI). In this embodiment, the data transmission and reception unit 260 may constitute a reception unit for a downlink data channel and a transmission unit for transmitting an uplink data channel.

The control unit 270 controls each function block constituting the UE 200. In particular, in the present embodiment, the control unit 270 can execute a control related to multi-PDSCH/PUSCH scheduling.

First, a control related to the multi-PDSCH scheduling will be described. The control unit 270 may assume that when any of the PUSCHs among the plurality of PUSCHs by the multi-PDSCH scheduling collides with a UL symbol, the PDSCH cancelled due to the collision is excluded from the specific scheduling target.

Here, a UL symbol may be interpreted as a symbol semi-statically assigned in a slot. The multi-PDSCH scheduling may allow collisions with such semi-static UL symbols, specifically overlapping with resources in a time direction. That is, the multi-PDSCH scheduling may cause collisions between PDSCH and semi-static UL symbols in Time Division Duplex (TDD).

Specific scheduling may also mean out-of-order scheduling (OoO scheduling). In the OoO scheduling, the UE 200 may operate as follows.
- For any two HARQ process IDs in a given scheduled cell, if the UE 200 is scheduled to start reception of a first PDSCH beginning with symbol j by PDCCH beginning with symbol j and ending with symbol i, the UE 200 does not expect to be scheduled to receive the PDSCH beginning before the end of the first PDSCH with a PDCCH ending later than symbol i.
- For any two HARQ process IDs in a given scheduled cell, if the UE is scheduled to start a first PUSCH transmission by a PDCCH starting in symbol j and ending in symbol i, the UE 200 does not expect to be scheduled to transmit the PUSCH beginning before the end of the first PUSCH by a PDCCH ending later than symbol i.

In the multi-PDSCH scheduling, the control unit 270 may determine the presence or absence of information about a code block group (CBG) based on a scheduled or valid PDSCH.

Specifically, the control unit 270 may determine the presence or absence of CBGTI (transmission information) and/or CBGFI (flushing out information) fields of the DCI based on the scheduled or valid PDSCH in the case of a DL grant DCI that is configured based on a TDRA table including a plurality of Start and Length Indicator Value (SLIV).

The valid PDSCH may be interpreted as a PDSCH that does not collide with a semi-static UL symbol.

Based on the number of the valid PDSCHs, the control unit 270 may determine a codebook including a feedback of Hybrid Automatic Repeat Request (HARQ) of the PDSCHs.

Specifically, in the case of a DL grant DCI that is configured based on a TDRA table including a plurality of Start and Length Indicator Value (SLIV), the control unit 270 may include HARQ-ACK in any sub-codebook (first sub-codebook or second sub-codebook) based on the number of valid PDSCHs in a type 2 HARQ-ACK (Acknowledgement) feedback.

Alternatively, the control unit 270 may include a HARQ-ACK in the second sub-codebook regardless of the number of valid or invalid PDSCHs.

The first sub-codebook may mean a sub-codebook for DCI that schedules only one PDSCH (which indicates that the TDRA table includes only one SLIV). Further, the types 1 and 2 are based on differences in codebook decision algorithms, and the HARQ-ACK codebook may be set dynamically in type 2.

When any PDSCH by multi-PDSCH scheduling collides with a UL symbol, the control unit 270 may assume that the PDSCH is received by semi-static scheduling cancelled due to the collision.

Specifically, the control unit 270 may assume that the PDSCH is received by a semi-persistent scheduling (SPS) PDSCH that overlaps with the PDSCH cancelled due to the collision (that is, using the same radio resources).

Next, the control related to the multi-PUSCH scheduling will be described. The control unit 270 may assume that the PUSCH cancelled due to the collision is excluded from the specific scheduling (OoO scheduling) target when any of the PUSCHs among the plurality of PUSCHs by multi-PUSCH scheduling collides with the DL symbol.

Here, the DL symbol may be interpreted as a symbol semi-statically assigned in the slot. The multi-PUSCH scheduling may allow collisions with such semi-static DL symbols, SSB symbols and/or CORESET 0 symbols, specifically overlapping with resources in the time direction. That is, multi-PUSCH scheduling may cause collisions between multi-PUSCH scheduling and semi-static UL symbols in a Time Division Duplex (TDD).

The control unit 270 may determine reporting of a Channel State Information (CSI) in multi-PUSCH scheduling based on the scheduled or valid PUSCH. Specifically, the control unit 270 may determine reporting of a CSI report based on the scheduled or valid PUSCH in the case of an A-CSI (Aperiodic-CSI) report triggered by a UL grant DCI set based on a TDRA table including a plurality of Start and Length Indicator Values (SLIVs).

A valid PUSCH may be interpreted as a PUSCH that does not collide with a semi-static UL symbol, an SSB and/or a symbol set to CORESET 0.

In multi-PUSCH scheduling, the control unit 270 may determine the presence or absence of information about a code block group (CBG) based on a scheduled PUSCH or a valid PUSCH.

Specifically, in the case of a UL grant DCI set based on a TDRA table including multiple SLIVs, the control unit 270 may determine the presence or absence (existence) of CBGTI and/or CBGFI fields of the DCI based on a scheduled PUSCH or a valid PUSCH.

The control unit 270 may enable the transmission of a configured grant (CG) PUSCH that overlaps with a canceled PUSCH. Further, the control unit 270 may enable the transmission of a CG PUSCH that has the same HARQ process ID as the canceled PUSCH.

Here, when any of the PUSCHs collides with a DL symbol in multi-PUSCH scheduling, the control unit 270 may stop the transmission of the PUSCH by the CG canceled due to the collision.

Specifically, the control unit 270 may apply operations described in Chapters 11 and 11.1 (Release 15, 16) of 3GPP TS 38.213 for PUSCH without DCI, to CG PUSCH. That is, if CG PUSCH overlaps with a DL symbol, CG PUSCH needs not be transmitted.

Alternatively, the control unit 270 need not transmit CG PUSCH that overlaps with the cancelled PUSCH and/or has the same HARQ process ID.

Further, the gNB 100 (data transmission and reception unit 260) may include a transmission unit for transmitting multiple downlink data channels (PDSCHs) scheduled by a single downlink control information (DCI) and a reception unit for receiving multiple uplink data channels (PUSCHs) according to multi-PDSCH/PUSCH scheduling.

### (3) Operation of Radio Communication Systems

Next, an operation of the radio communication system 10 will be described. Specifically, the operation related to multi-PDSCH/PUSCH scheduling, especially when PDSCH/PUSCH collides (allocates overlapping radio resources) with semi-static UL/DL symbols and the like in TDD, will be described.

### (3.1) Assumptions

3GPP Release-17 may support multi-PDSCH/PUSCH scheduling, allowing the following collisions.

· For multi-PDSCH scheduling, collisions with quasi-static UL symbols
· For multi-PUSCH scheduling, collisions with quasi-static DL symbols, SSB symbols, and CORESET 0 symbols

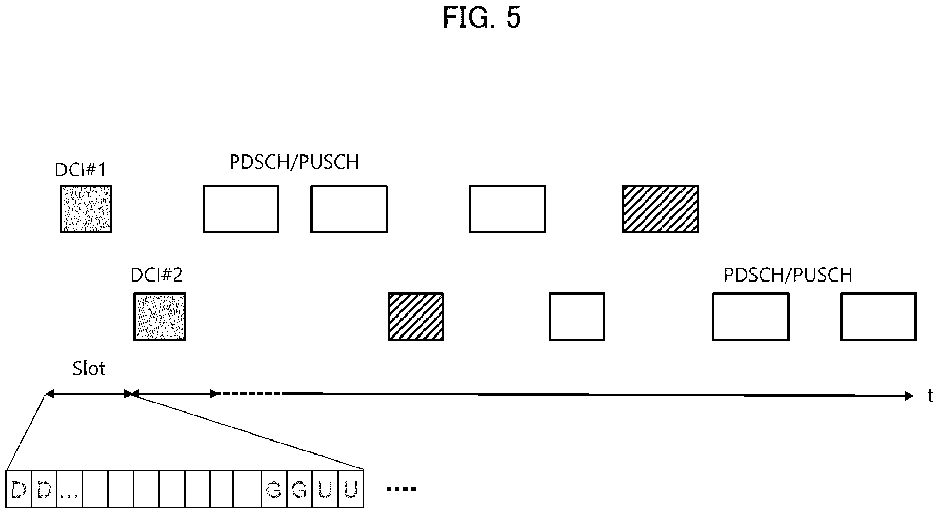

FIG. 5 shows a configuration example of multi-PDSCH/PUSCH scheduling. As shown in FIG. 5, the multi-PDSCH/PUSCH scheduling allows multiple PDSCH/PUSCHs to be scheduled by one (single) DCI. On the other hand, the slot format includes a semi-static symbol (UL or DL symbol, and a guard (G) symbol may be included).

Thus, in the TDD, a collision between the PDSCH/PUSCH and the symbol may occur. Scheduling of the PDSCH/PUSCH (see hatched-line frames in the drawing) in which such a collision may occur is also permitted, but in practice the data channel cannot be transmitted.

In view of this situation, it is considered that there are the following problems.

· (Problem) 1: It is not clear whether PDSCH/PUSCH cancelled due to collision with semi-static UL/DL symbols will be considered in OoO scheduling.
· (Problem 2): For A-CSI reports triggered by DCI scheduling multiple PUSCHs with multi-PUSCH scheduling, it is assumed to apply the provisions of 3GPP Release-16, but the rules do not take into account cancellation of PUSCH due to collision with DL symbols.
· (Problem 3): When the number of PUSCHs is used to determine the presence of a CBGTI field, it is not clear whether the number of PUSCHs should be based on the number of scheduled PUSCHs or the number of valid PUSCHs. Further, when the number of PDSCHs is used to determine the presence of a CBGTI/CBGFI field, it is not clear whether determination should be based on the number of scheduled PDSCHs or the number of valid PDSCHs.
· (Problem 4): PDSCH cancellation due to collisions with quasi-static UL symbols is not considered. For example, if the DCI schedules multiple PDSCHs and only one PDSCH is valid, it is not clear whether the HARQ-ACK feedback should be included in the first sub-codebook or the second sub-codebook.
· (Problem 5): In the multi-PDSCH scheduling, among multiple PDSCHs scheduled by a single DCI, one PDSCH is cancelled due to a collision with a quasi-static UL symbol, but if it meets the timeline, it is not clear whether the SPS PDSCH can be received and whether it is allowed to schedule another PDSCH that overlaps with the cancelled PDSCH.
· (Problem 6): In multi-PUSCH scheduling, among multiple PUSCHs scheduled by a single DCI, one PUSCH is cancelled due to a collision with a quasi-static UL symbol, but meets the timeline, it is not clear whether the CG PUSCH that overlaps with the cancelled PUSCH can be transmitted, and if it meets the timeline, it is not clear whether the CG PUSCH that overlaps with the same HARQ processing as the cancelled PUSCH can be transmitted. Further, it is not clear whether another PUSCH that overlaps with the cancelled PUSCH can be scheduled.

### (3.2) Example

Next, operation examples 1 to 6 corresponding to the above-mentioned Problems 1 to 6 will be described. First, a sequence example related to scheduling of data channels (PDSCH/PUSCH) will be described.

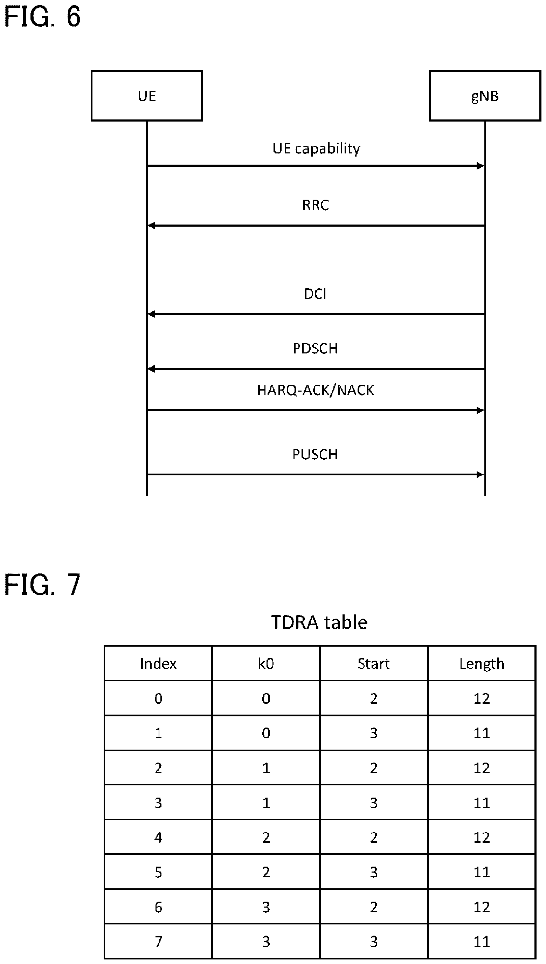

FIG. 6 shows a sequence example related to scheduling of data channels. As shown in FIG. 6, the UE 200 may transmit UE Capability Information to the network, specifically to the gNB 100. In particular, an example of UE Capability Information according to this operation example will be described below.

The gNB 100 can execute setting by RRC based on the capability of the UE 200. Further, the gNB 100 may transmit the DCI to the UE 200. As described above, in the multi-PDSCH/PUSCH scheduling, a single DCI may schedule multiple PDSCH/PUSCHs.

The gNB 100 may send multiple PDSCHs to the UE 200 in response to scheduling by the DCI. The UE 200 may send a HARQ feedback (ACK or NACK) for receipt of the PDSCH to the gNB 100. As described above, types 1 and 2 may be supported for HARQ-ACK feedback.

Furthermore, the UE 200 may also send multiple PUSCHs to the gNB100 in accordance with the multi-PUSCH scheduling.

### (3.2.1) Operation Example 1

This operation example corresponds to the problem 1 and relates to the OoO scheduling. When a PDSCH by multi-PDSCH scheduling is canceled due to a collision with a quasi-static UL symbol, any of the following operations may be applied to a PDSCH included in multiple PDSCHs scheduled by the multi-PDSCH scheduling.

· (Option 1-1): The canceled PDSCH is not considered in the OoO scheduling decision.

As a behavior of the UE 200, it may be allowed that the PDSCH scheduled by the previous DCI and canceled ends later than the start of the PDSCH scheduled by the later DCI.

Using the expression in the specification of 3GPP, for any two HARQ process IDs in a given scheduled cell, if the UE is scheduled to start receiving a first PDSCH starting in symbol j by a PDCCH ending in symbol i, where the first PDSCH doesn't overlap with any semi-static UL symbol, the UE is not expected to be scheduled to receive a second PDSCH starting earlier than the end of the first PDSCH with a PDCCH that ends later than symbol I, where the second PDSCH doesn't overlap with any semi-static UL symbol.

· (Option 1-2): Cancelled PDSCH will continue to be considered in determination of the OoO scheduling.

As a behavior of the UE 200, the start of the PDSCH scheduled by the later DCI should be later than the end of the PDSCH scheduled by the earlier DCI.

Further, if the PUSCH by multi-PUSCH scheduling is cancelled due to collisions with quasi-static DL symbols, SSB symbols and/or CORESET 0 symbols, any of the following operations may be applied for PUSCHs included in the multiple PUSCHs scheduled by the multi-PUSCH scheduling.

· (Option 2-1): Cancelled PUSCHs are not considered in in determination of the OoO scheduling.

As a behavior of the UE 200, it may be allowed that the PUSCH which is scheduled by a previous DCI and cancelled ends later than the start of the PUSCH scheduled by a later DCI.

Using the expression in the specification of 3GPP, for any two HARQ process IDs in a given scheduled cell, if the UE is scheduled to start a first PUSCH transmission starting in symbol j by a PDCCH ending in symbol i, where the first PUSCH doesn't overlap with any with semi-static DL symbol, and/or symbol configured for SSB or CORESET#0, the UE is not expected to be scheduled to transmit a second PUSCH starting earlier than the end of the first PUSCH by a PDCCH that ends later than symbol I, where the second PUSCH doesn't overlap with any with semi-static DL symbol, and/or symbol configured for SSB or CORESET#0.

· (Option 2-2): Cancelled PUSCHs will continue to be considered in determination of the OoO scheduling.

As a behavior of the UE 200, the start of any PUSCH scheduled by a later DCI should be later than the end of any PUSCH scheduled by a previous DCI.

### (3.2.2) Operation Example 2

This operation example corresponds to Problem 2 and relates to A-CSI reporting. FIG. 7 shows an example of a TDRA table.

For an A-CSI report triggered by an UL grant DCI configured according to a TDRA table including multiple SLIVs in at least one row, such as the TDRA table in FIG. 7, any of the following actions may be applied:

· (Option 1): The A-CSI report is determined based on the scheduled PUSCH.

As a behavior of the UE 200, assuming that the number of scheduled PUSCHs is M, if M≤2, the UE 200 may report the A-CSI report at the M-th scheduled PUSCH.

If M>2, the UE 200 may report the A-CSI report at the (M-1)-th scheduled PUSCH.

It should be noted that the PUSCH used for the A-CSI report may be cancelled due to collisions with semi-static DL symbols, SSB symbols and/or symbols set to CORESET 0.

Further, when the PUSCH determined for the A-CSI report is cancelled due to collisions with the DL symbols, SSB symbols and/or symbols set to CORESET 0, any of the following operations may be applied.

· (Alt 1): The last valid PUSCH before the determined PUSCH is used for the A-CSI report.

· (Alt 2): The last scheduled PUSCH is used for the A-CSI report.
· (Alt 3): The A-CSI report is not done.

· (Option 2): The A-CSI report is determined based on the valid PUSCH.

As a behavior of the UE 200, assuming that the number of scheduled PUSCHs is M and the number of valid PUSCHs is N, if N≤2, the UE 200 may report the A-CSI report at the N-th valid PUSCH.

If N>2, the UE 200 may report the A-CSI report at the (N-1)-th valid PUSCH.

As described above, a valid PUSCH may be interpreted as a PUSCH that does not collide with semi-static UL symbols, SSBs and/or symbols set to CORESET 0.

In the case of this option, the PUSCH used for the A-CSI report may be canceled due to a collision with DL symbols, SSBs or symbols set to CORESET 0.

### (3.2.3) Operation Example 3

This operation example corresponds to Problem 3 and relates to a CBG-based transmission. For DLgrant DCI set according to a TDRA table including multiple SLIVs in at least one row, such as the TDRA table in FIG. 7, any of the following operations may be applied.

· (Option 1-1): The presence of the CBGTI/CBGFI field is determined based on the scheduled PDSCH.

If the number of scheduled PDSCHs by DCI is one, the presence of the CBGTI/CBGFI field may be assumed. If the number of scheduled PDSCHs by DCI is greater than one, the absence of the CBGTI/CBGFI field may be assumed.

· (Option 1-2): The presence of the CBGTI/CBGFI field is determined based on the valid PDSCH.

If the number of scheduled PDSCHs by DCI is one, the presence of the CBGTI/CBGFI field may be assumed. If the number of scheduled PDSCHs by DCI is greater than one, the following operation may occur.

• If the number of valid PDSCHs is one, the CBGTI/CBGFI field may be assumed to be present.
• If the number of valid PDSCHs is greater than one, the CBGTI/CBGFI field may be assumed to be absent.

Further, for UL grant DCIs configured according to a TDRA table including more than one SLIV in at least one row, any of the following operations may be applied.

· (Option 2-1): The presence of the CBGTI field is determined based on the scheduled PUSCH.

If the number of scheduled PUSCHs by the DCI is one, the presence of the CBGTI field may be assumed. If the number of scheduled PUSCHs by DCI is greater than one, the CBGTI field may be assumed to be absent.

· (Option 2-2): The presence of the CBGTI field is determined based on the valid PUSCHs. If the number of scheduled PUSCHs by the DCI is one, the presence of the CBGTI field may be assumed. If the number of scheduled PUSCHs by the DCI is greater than one, the following operation may occur.

· If the number of valid PUSCHs is one, the CBGTI field may be assumed to be present.

· If the number of valid PUSCHs is greater than one, the CBGTI field may be assumed to be absent.

### (3.2.4) Example 4

This operation example corresponds to Problem 4 and relates to a type-2 HARQ-ACK feedback. For DL grant DCIs that are configured according to a TDRA table including multiple SLIVs in at least one row and that schedule multiple PDSCHs, such as the TDRA table in FIG. 7, any of the following operations may be applied.
· (Option 1) : The HARQ-ACK information is included in the second sub-codebook regardless of the number of invalid/valid PDSCHs.
· (Option 2): The HARQ-ACK information may be included in the first or second sub-codebook based on the number of valid PDSCHs.

In this case, if there is only one valid PDSCH among multiple scheduled PDSCHs, the HARQ-ACK information for the DCI may be included in the first sub-codebook. If there are multiple valid PDSCHs among multiple scheduled PDSCHs, the HARQ-ACK information for the DCI may be included in the second sub-codebook.

It should be noted that the first sub-codebook may mean a sub-codebook for the DCI that schedules only one PDSCH (that is, the TDRA row includes only one SLIV).

### (3.2.5) Operation Example 5

This example corresponds to Problem 5 and relates to handling of a SPS/DG PDSCH in the event of a collision. A PDSCH included in the multiple PDSCHs scheduled by a single DCI, in which the PDSCH is cancelled due to a collision with a semi-static UL symbol. In this case, if the timeline specified in 3GPP Release-16 is met, the PDSCH may be overwritten by SPS (PDSCH rescheduling). Specifically, any of the following actions may be applied.

· (Option 1-1) : It may be assumed that the SPS PDSCH overlapping with the cancelled PDSCH can be received.

The operations described in 3GPP TS 38.213, Chapters 11 and 11.1 (Release 15, 16) for PDSCH without DCI may also apply to a SPS PDSCH. That is, if the SPS PDSCH overlaps with a UL symbol, the SPS PDSCH need not be received.

· (Option 1-2): It may be assumed that the SPS PDSCH that overlaps with the canceled PDSCH will not be received.

Further, any of the following operations may be applied to the resources of the canceled PDSCH.
· (Option 2-1): The DCI may schedule another dynamic PDSCH for the remaining valid symbols of the canceled PDSCH.
· (Option 2-2): The DCI is not expected to schedule another dynamic PDSCH for the remaining valid symbols in the canceled PDSCH.

### (3.2.6) Operation Example 6

This operation example corresponds to Problem 6, and relates to handling of a CG/DG PUSCH in the event of a collision. A PUSCH included in multiple PUSCHs scheduled by a single DCI, in which the PUSCH is canceled due to a collision with semi-static DL symbols, SSB symbols and/or symbols set to CORESET 0. In this case, if the timeline specified in 3GPP Release-16 is met, the PUSCH may be overwritten by the CG (PUSCH rescheduling). Specifically, any of the following actions may be applied.

· (Option 1-1): It may be assumed that CG PUSCHs overlapping with the cancelled PUSCH can be transmitted.

The operations described in 3GPP TS 38.213, Chapters 11 and 11.1 (Release 15, 16) for PUSCH without DCI may also apply to a CG PUSCH. That is, if the CG PUSCH overlaps with a DL symbol, the CG PUSCH need not be transmitted.

· (Option 1-2): It may be assumed that the CG PUSCH overlapping with the cancelled PUSCH will not be transmitted.

Further, if the timeline specified in 3GPP Release-16 is met, any of the following operations may be applied for a collision of a DG/CG HARQ process.

· (Option 2-1): It may be assumed that a CG PUSCH with the same HARQ process ID as the canceled PUSCH can be transmitted.

The operations described in 3GPP TS 38.213, Chapters 11 and 11.1 (Release 15, 16) for PUSCHs that do not use DCI may also apply to a CG PUSCH. That is, if the CG PUSCH overlaps with a DL symbol, the CG PUSCH need not be transmitted.

· (Option 2-2): A CG PUSCH that has the same HARQ process ID as the canceled PUSCH need not be transmitted.

Further, any of the following actions may be applied to the resources of the canceled PUSCH:
· (Option 3-1): The DCI may schedule another dynamic PUSCH for the remaining valid symbols of the canceled PUSCH.
· (Option 3-2): The DCI is not expected to schedule another dynamic PUSCH for the remaining valid symbols of the canceled PUSCH.

### (3.2.7) Variations

With respect to the above operation examples, the following variations may be further applied. Specifically, determination as to which operation example (option) is to be applied may be based on any of the following.

· Upper layer (such as RRC) parameters
· UE capability reporting from the UE 200
· 3GPP Specifications
· Combinations of settings of Upper Layer Parameters and a reported UE Capability

The operation examples may be limited to the following conditions.

· 52.6 to 71 GHz (FR2x)
· Unlicensed frequency band
· Specific SCS
· Any combination of the above

### (3.2.8) UE capability

The UE capability of the UE 200 for the multi-PDSCH/PUSCH scheduling may include at least one of the following.

· Capability of supporting the OoO scheduling in consideration of the cancelled PDSCH
· Capability of supporting the OoO scheduling in consideration of the cancelled PUSCH
· Capability of supporting the A-CSI report in consideration of the cancelled PUSCH
· Capability of supporting CBG-based scheduling in consideration of the cancelled PDSCH
· Capability of supporting CBG-based scheduling in consideration of the cancelled PUSCH
· Capability of supporting type 2 HARQ-ACK CB generation in consideration of the cancelled PDSCH
· Capability of supporting SPS PDSCH overwrite in consideration of the cancelled PDSCH
· Capability of supporting allocating resources of the cancelled PDSCH to another dynamic grant PDSCH
· Capability of supporting overwriting CG PDSCH in consideration of the cancelled PUSCH
· Capability of supporting allocating resources of the cancelled PUSCH to another dynamic grant PUSCH

### (4) Operation/Effect

According to the above-described embodiments, the following effects can be obtained. Specifically, according to the above-mentioned gNB 100 and UE 200, even when the multi-PDSCH/PUSCH scheduling is applied and a collision between PDSCHs/PUSCHs and UL/DL symbols is permitted, operations according to Operation Examples 1 to 6 can be executed, so that reception of PDSCHs/PUSCHs can be continued normally.

That is, according to the gNB 100 and UE 200, appropriate multi-PDSCH/PUSCH scheduling considering a collision at TDD can be realized.

### (5)Other Embodiments

Although the embodiments have been described above, they are not limited to the description of the embodiments, and it is obvious to those skilled in the art that various modifications and improvements can be made.

For example, in the embodiments described above, PDSCH/PUSCH has been described as an example, but the same operation may be applied to multiple data channels scheduled by a single DCI.

In the above description, configure, activate, update, indicate, enable, specify, and select may be interchangeably interpreted. Similarly, link, associate, correspond, and map may be interchangeably interpreted, and allocate, assign, monitor, and map may also be interchangeably interpreted.

In addition, specific, dedicated, UE-specific, and UE-dedicated may be interchangeably interpreted. Similarly, common, shared, group-common, UE-common, and UE-shared may be interchangeably interpreted.

The block diagram (FIG. 4) used in the description of the above-described embodiment illustrates blocks in units of functions. Those functional blocks (components) can be realized by any combination of at least one of hardware and software. A realization method for each functional block is not particularly limited. That is, each functional block may be realized by using one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (component) that makes a transmitting function work may be called a transmitting unit or a transmitter. For any of the above, as described above, the realization method is not particularly limited.

Further, the above-described gNB 100 and UE 200 (the device) may function as a computer that performs processing of a radio communication method of the present disclosure. FIG. 8 is a diagram illustrating an example of a hardware configuration of the device. As illustrated in FIG. 8, the device may be configured as a computer device including a processor 1001, a memory 1002, a storage 1003, a communication device 1004, an input device 1005, an output device 1006, a bus 1007, and the like.

Furthermore, in the following description, the term "device" can be read as meaning circuit, device, unit, or the like. The hardware configuration of the device may include one or more devices illustrated in the figure or may not include some of the devices.

Each of the functional blocks of the device (FIG. 4) is implemented by means of any of hardware elements of the computer device or a combination of the hardware elements.

Each function in the device is realized by loading predetermined software (programs) on hardware such as the processor 1001 and the memory 1002 so that the processor 1001 performs arithmetic operations to control communication via the communication device 1004 and to control at least one of reading and writing of data on the memory 1002 and the storage 1003.

The processor 1001 operates, for example, an operating system to control the entire computer. The processor 1001 may be configured with a central processing unit (CPU) including interfaces with peripheral devices, control devices, arithmetic devices, registers, and the like.

Moreover, the processor 1001 reads a program (program code), a software module, data, and the like from at least one of the storage 1003 and the communication device 1004 into the memory 1002, and executes various processes according to these. As the program, a program causing the computer to execute at least part of the operation described in the above embodiment is used. Alternatively, various processes described above may be executed by one processor 1001 or may be executed simultaneously or sequentially by two or more processors 1001. The processor 1001 may be implemented by using one or more chips. Alternatively, the program may be transmitted from a network via a telecommunication line.

The memory 1002 is a computer readable recording medium and may be configured, for example, with at least one of a Read Only Memory (ROM), Erasable Programmable ROM (EPROM), Electrically Erasable Programmable ROM (EEPROM), Random Access Memory (RAM), and the like. The memory 1002 may be referred to as a register, cache, main memory (main storage device), and the like. The memory 1002 may store therein programs (program codes), software modules, and the like that can execute the method according to one embodiment of the present disclosure.

The storage 1003 is a computer readable recording medium. Examples of the storage 1003 include at least one of an optical disk such as Compact Disc ROM (CD-ROM), a hard disk drive, a flexible disk, a magneto-optical disk (for example, a compact disk, a digital versatile disk, Blu-ray (registered trademark) disk), a smart card, a flash memory (for example, a card, a stick, a key drive), a floppy (registered trademark) disk, a magnetic strip, and the like. The storage 1003 may be referred to as an auxiliary storage device. The recording medium may be, for example, a database including at least one of the memory 1002 and the storage 1003, a server, or other appropriate medium.

The communication device 1004 is hardware (transmission/reception device) capable of performing communication between computers via at least one of a wired network and a wireless network. The communication device 1004 is also referred to as, for example, a network device, a network controller, a network card, a communication module, and the like.

The communication device 1004 may include a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may have an integrated configuration (for example, a touch screen).

Also, the respective devices such as the processor 1001 and the memory 1002 are connected to each other with the bus 1007 for communicating information. The bus 1007 may be constituted by a single bus or may be constituted by different buses for each device-to-device.

Further, the device may be configured to include hardware such as a microprocessor, a Digital Signal Processor (DSP), an Application Specific Integrated Circuit (ASIC), a Programmable Logic Device (PLD), and a Field Programmable Gate Array (FPGA). Some or all of these functional blocks may be realized by means of this hardware. For example, the processor 1001 may be implemented by using at least one of the above-described items of hardware.

Further, notification of information is not limited to that in the aspect/embodiment described in the present disclosure, and may be performed by using other methods. For example, notification of information may be performed by physical layer signaling (for example, Downlink Control Information (DCI), Uplink Control Information (UCI), higher layer signaling (for example, RRC signaling, Medium Access Control (MAC) signaling), broadcast information (Master Information Block (MIB), System Information Block (SIB)), other signals, or a combination thereof. The RRC signaling may also be referred to as an RRC message, for example, or may be an RRC Connection Setup message, an RRC Connection Reconfiguration message, or the like.

Each aspect/embodiment described in the present disclosure may be applied to at least one of Long Term Evolution (LTE), LTE-Advanced (LTE-A), SUPER 3G, IMT-Advanced, the 4th generation mobile communication system (4G), the 5th generation mobile communication system (5G), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), a system using any other appropriate system, and a next-generation system that is expanded based on these. Further, a plurality of systems may be combined (for example, a combination of at least one of LTE and LTE-A with 5G) and applied.

The order of the processing procedures, sequences, flowcharts, and the like of each aspect/embodiment described in the present disclosure may be exchanged as long as there is no contradiction. For example, the methods described in the present disclosure present the elements of the various steps by using an exemplary order and are not limited to the presented specific order.

The specific operation that is performed by a base station in the present disclosure may be performed by its upper node in some cases. In a network constituted by one or more network nodes having a base station, it is obvious that the various operations performed for communication with the terminal may be performed by at least one of the base station and other network nodes other than the base station (for example, an MME, an S-GW, and the like may be considered, but there is not limited thereto). In the above, an example in which there is one network node other than the base station is explained; however, a combination of a plurality of other network nodes (for example, an MME and an S-GW) may be used.

Information and signals (information and the like) can be output from a higher layer (or lower layer) to a lower layer (or higher layer). These may be input and output via a plurality of network nodes.

The input/output information may be stored in a specific location (for example, a memory) or may be managed in a management table. The information to be input/output can be overwritten, updated, or added. The information may be deleted after outputting. The inputted information may be transmitted to another device.

The determination may be made by using a value (0 or 1) represented by one bit, by truth-value (Boolean: true or false), or by comparison of numerical values (for example, comparison with a predetermined value).

Each of the aspects/embodiment described in the present disclosure may be used separately or in combination, or may be switched in accordance with the execution. In addition, notification of predetermined information (for example, notification of "is X") is not limited to being performed explicitly, and it may be performed implicitly (for example, without notifying the predetermined information).

Regardless of being referred to as software, firmware, middleware, microcode, hardware description language, or some other name, software should be interpreted broadly to mean instructions, an instruction set, code, a code segment, program code, a program, a subprogram, a software module, an application, a software application, a software package, a routine, a subroutine, an object, an executable file, an execution thread, a procedure, a function, and the like.

Further, software, instruction, information, and the like may be transmitted and received via a transmission medium. For example, when software is transmitted from a website, a server, or another remote source by using at least one of a wired technology (a coaxial cable, an optical fiber cable, a twisted pair cable, a Digital Subscriber Line (DSL), or the like) and a wireless technology (infrared light, microwave, or the like), then at least one of these wired and wireless technologies is included within the definition of the transmission medium.

Information, signals, or the like described in the present disclosure may be represented by using any of a variety of different technologies. For example, data, an instruction, a command, information, a signal, a bit, a symbol, a chip, or the like that may be mentioned throughout the above description may be represented by a voltage, a current, an electromagnetic wave, a magnetic field or magnetic particles, an optical field or photons, or any combination thereof.

It should be noted that the terms described in the present disclosure and terms necessary for understanding the present disclosure may be replaced with terms having the same or similar meanings. For example, at least one of a channel and a symbol may be a signal (signaling). A signal may also be a message. Further, a Component Carrier (CC) may be referred to as a carrier frequency, a cell, a frequency carrier, or the like.

The terms "system" and "network" used in the present disclosure can be used interchangeably.

Furthermore, information, parameters, and the like described in the present disclosure may be represented by an absolute value, may be represented by a relative value from a predetermined value, or may be represented by corresponding other information. For example, a radio resource may be indicated using an index.

Names used for the above parameters are not restrictive names in any respect. In addition, formulas and the like using these parameters may be different from those explicitly disclosed in the present disclosure. Since the various channels (for example, a PUCCH, a PDCCH, or the like) and information elements can be identified by any suitable names, the various names allocated to these various channels and information elements shall not be restricted in any way.

In the present disclosure, the terms such as "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. A base station may also be referred to with a term such as a macro cell, a small cell, a femtocell, or a pico cell.

A base station can accommodate one or more (for example, three) cells (also referred to as sectors). In a configuration in which a base station accommodates a plurality of cells, the entire coverage area of the base station can be divided into a plurality of smaller areas. In each of the smaller areas, a communication service can be provided by a base station subsystem (for example, a small base station for indoor use (remote radio head: RRH)).

The term "cell" or "sector" refers to a part or all of the coverage area of at least one of a base station and a base station subsystem that performs a communication service in this coverage.

In the present disclosure, the terms such as "mobile station (Mobile Station: MS)", "user terminal", "user equipment (User Equipment: UE)", and "terminal" can be used interchangeably.

A mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms by those skilled in the art.

At least one of a base station and a mobile station may be called a transmitting device, a receiving device, a communication device, or the like. Note that at least one of a base station and a mobile station may be a device mounted on a moving body, a moving body itself, or the like. The moving body may be a vehicle (for example, a car, an airplane, or the like), an unmanned moving body (a drone, a self-driving car, or the like), or a robot (manned type or unmanned type) . At least one of a base station and a mobile station also includes a device that does not necessarily move during the communication operation. For example, at least one of a base station and a mobile station may be an Internet of Things (IoT) device such as a sensor.

Also, a base station in the present disclosure may be read as meaning a mobile station (user terminal, hereinafter, the same). For example, each aspect/embodiment of the present disclosure may be applied to a configuration in which communication between a base station and a mobile station is replaced with communication between a plurality of mobile stations (which may be called Device-to-Device (D2D), Vehicle-to-Everything (V2X), or the like). In this case, the mobile station may have the function of a base station. In addition, words such as "uplink" and "downlink" may also be read as meaning words corresponding to inter-terminal communication (for example, "side"). For example, an uplink channel, a downlink channel, or the like may be read as meaning a side channel.

Similarly, the mobile station in the present disclosure may be read as meaning a base station. In this case, the base station may have the function of the mobile station. A radio frame may be composed of one or more frames in the time domain. Each of the one or more frames in the time domain may be referred to as a subframe. A subframe may be further composed of one or more slots in the time domain. The subframe may be a fixed time length (for example, 1 ms) independent of the numerology.

The numerology may be a communication parameter applied to at least one of transmission and reception of a certain signal or channel. The numerology may indicate at least one of, for example, subcarrier spacing (SCS), bandwidth, symbol length, cyclic prefix length, transmission time interval (TTI), the number of symbols per TTI, radio frame configuration, a specific filtering process performed by a transceiver in the frequency domain, a specific windowing process performed by a transceiver in the time domain, and the like.

A slot may be composed of one or more symbols (Orthogonal Frequency Division Multiplexing (OFDM)) symbols, Single Carrier Frequency Division Multiple Access (SC-FDMA) symbols, and the like) in the time domain. A slot may be a unit of time based on the numerology.

A slot may include a plurality of minislots. Each minislot may be composed of one or more symbols in the time domain. A minislot may be called a subslot. A minislot may be composed of fewer symbols than slots. A PDSCH (or PUSCH) transmitted in time units greater than the minislot may be referred to as a PDSCH (or PUSCH) mapping type A. A PDSCH (or PUSCH) transmitted using a minislot may be referred to as a PDSCH (or PUSCH) mapping type B.

Each of a radio frame, subframe, slot, minislot, and symbol represents a time unit for transmitting a signal. A radio frame, subframe, slot, minislot, and symbol may have respectively different names corresponding to them.

For example, one subframe may be called a transmission time interval (TTI), a plurality of consecutive subframes may be called a TTI, and one slot or one minislot may be called a TTI. That is, at least one of the subframe and TTI may be a subframe (1 ms) in the existing LTE, a period shorter than 1 ms (for example, 1 to 13 symbols), or a period longer than 1 ms. Note that, a unit representing TTI may be called a slot, a minislot, or the like instead of a subframe.

Here, a TTI refers to the minimum time unit of scheduling in radio communication, for example. For example, in the LTE system, the base station performs scheduling for allocating radio resources (frequency bandwidth, transmission power, and the like that can be used in each user terminal) to each user terminal in units of TTI. The definition of TTI is not limited to this.

A TTI may be a transmission time unit such as a channel-coded data packet (transport block), a code block, or a code word, or may be a processing unit such as scheduling or link adaptation. When a TTI is given, a time interval (for example, the number of symbols) in which a transport block, a code block, a code word, and the like are actually mapped may be shorter than TTI.

When one slot or one minislot is called a TTI, one or more TTIs (that is, one or more slots or one or more minislots) may be the minimum time unit of the scheduling. The number of slots (minislot number) constituting the minimum time unit of the scheduling may be controlled.

A TTI having a time length of 1 ms may be referred to as an ordinary TTI (TTI in LTE Rel. 8-12), a normal TTI, a long TTI, an ordinary subframe, a normal subframe, a long subframe, a slot, and the like. A TTI shorter than the ordinary TTI may be referred to as a shortened TTI, a short TTI, a partial TTI (partial or fractional TTI), a shortened subframe, a short subframe, a minislot, a subslot, a slot, and the like.

In addition, a long TTI (for example, ordinary TTI, subframe, and the like) may be read as meaning a TTI having a time length exceeding 1 ms, and a short TTI (for example, shortened TTI) may be read as meaning a TTI having a TTI length of less than a TTI length of a long TTI and a TTI length of 1 ms or more.

A resource block (RB) is a resource allocation unit in the time domain and the frequency domain, and may include one or more consecutive subcarriers in the frequency domain. The number of subcarriers included in the RB may be the same regardless of the numerology, and may be 12, for example. The number of subcarriers included in the RB may be determined based on the numerology.

Further, the time domain of an RB may include one or more symbols, and may have a length of 1 slot, 1 minislot, 1 subframe, or 1 TTI. Each TTI, subframe, or the like may be composed of one or more resource blocks.

Note that, one or more RBs may be called a physical resource block (PRB), a subcarrier group (SCG), a resource element group (REG), a PRB pair, a RB pair, and the like.

A resource block may be configured by one or more resource elements (REs). For example, one RE may be a radio resource domain of one subcarrier and one symbol.

A bandwidth part (BWP) (which may be called a partial bandwidth or the like) may represent a subset of consecutive common resource blocks (RBs) for a certain numerology in a certain carrier. Here, the common RB may be specified by an index of the RB based on the common reference point of the carrier. A PRB may be defined in a certain BWP and numbered within that BWP.

A BWP may include a BWP for UL (UL BWP) and a BWP for DL (DL BWP). One or more BWPs may be configured in one carrier for the UE.

At least one of the configured BWPs may be active, and the UE does not have to expect to transmit and receive predetermined signals/channels outside the active BWP. Note that "cell", "carrier", and the like in this disclosure may be read as meaning "BWP".

The above-described structures such as a radio frame, a subframe, a slot, a minislot, and a symbol are merely examples. For example, structures such as the number of subframes included in a radio frame, the number of slots per subframe or radio frame, the number of minislots included in a slot, the number of symbols and RBs included in a slot or minislot, the number of subcarriers included in RBs, and the number of symbols included in a TTI, a symbol length, the cyclic prefix (CP) length, and the like can be changed in various manner.

The terms "connected", "coupled", or any variations thereof mean any direct or indirect connection or coupling between two or more elements, and can include that one or more intermediate elements are present between two elements that are "connected" or "coupled" to each other. The coupling or connection between the elements may be physical, logical, or a combination thereof. For example, "connection" may be read as meaning "access". In the present disclosure, two elements can be "connected" or "coupled" to each other by using at least one of one or more wires, one or more cables, and one or more printed electrical connections, and as some non-limiting and non-exhaustive examples, by using electromagnetic energy having wavelengths in the radio frequency domain, a microwave region, and a light (both visible and invisible) region, and the like.

A reference signal may be abbreviated as RS and may be called a pilot according to applicable standards.

As used in the present disclosure, the phrase "based on" does not mean "based only on" unless explicitly stated otherwise. In other words, the phrase "based on" means both "based only on" and "based at least on".

"Means" in the configuration of each device above may be replaced with "unit", "circuit", "device", and the like.

Any reference to elements using a designation such as "first", "second", or the like used in the present disclosure generally does not limit the amount or order of those elements. Such designations can be used in the present disclosure as a convenient method to distinguish between two or more elements. Thus, the reference to the first and second elements does not imply that only two elements can be adopted, or that the first element has to precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive-OR.

Throughout the present disclosure, for example, during translation, if articles such as a, an, and the in English are added, the present disclosure may include that a noun following these articles is used in plural.

As used in this disclosure, the term "determining" may encompass a wide variety of actions. "determining" includes deeming that determining has been performed by, for example, judging, calculating, computing, processing, deriving, investigating, searching (looking up, search, inquiry) (for example, searching in a table, database, or another data structure), ascertaining, and the like. In addition, "determining" can include deeming that determining has been performed by receiving (for example, receiving information), transmitting (for example, transmitting information), inputting (input), outputting (output), access (accessing) (for example, accessing data in a memory), and the like. In addition, "determining" can include deeming that determining has been performed by resolving, selecting, choosing, establishing, comparing, and the like. That is, "determining" may include deeming that "determining" regarding some action has been performed. Moreover, "determining" may be read as meaning "assuming", "expecting", "considering", and the like.

In the present disclosure, the wording "A and B are different" may mean "A and B are different from each other". It should be noted that the wording may mean "A and B are each different from C". Terms such as "separate", "couple", or the like may also be interpreted in the same manner as "different".

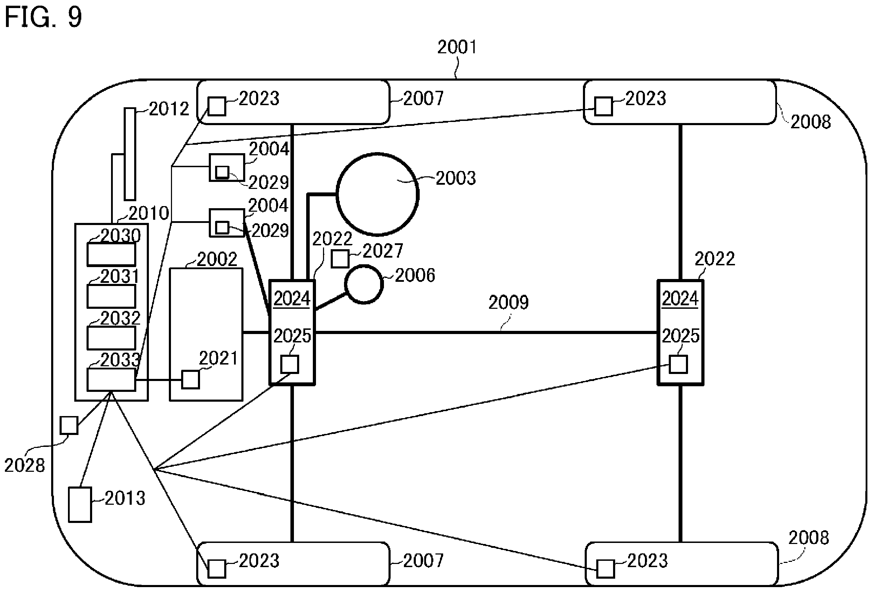

FIG. 9 shows a configuration example of a vehicle 2001. As shown in Figure 13, the vehicle 2001 includes a drive 2002, a steering 2003, an accelerator pedal 2004, a brake pedal 2005, a shift lever 2006, left and right front wheels 2007, left and right rear wheels 2008, an axle 2009, an electronic controller 2010, various sensors 2021 to 2029, an information service unit 2012, and a communication module 2013.

Examples of the drive 2002 include, an engine, a motor, and a hybrid of an engine and a motor. The steering 2003 includes at least a steering wheel (also called a handle) and steers at least one of the front and rear wheels based on an operation of a steering wheel operated by a user. The electronic controller 2010 includes a microprocessor 2031, a memory (ROM, RAM) 2032, and a communication port (IO port) 2033. The electronic controller 2010 receives signals from various sensors 2021 to 2027 provided in the vehicle. The electronic controller 2010 may be called an ECU (Electronic Control Unit).

The signals from the various sensors 2021 to 2028 include a current signal from a current sensor 2021 for sensing current of a motor, a rotation speed signal of a front wheel and a rear wheel acquired by the speed sensor 2022, a pressure signal of a front wheel and a rear wheel acquired by an air pressure sensor 2023, a speed signal of a vehicle acquired by a speed sensor 2024, an acceleration signal acquired by an acceleration sensor 2025, an accelerator pedal pressed-amount signal acquired by an accelerator pedal sensor 2029, a brake pedal pressed-amount signal acquired by a brake pedal sensor 2026, an operation signal of the shift lever acquired by a shift lever sensor 2027, and a detection signal acquired by an object detection sensor 2028 for detecting obstacles, vehicles, pedestrians, and the like.

The information service unit 2012 includes various devices such as a car navigation system, an audio system, a speaker, a television, and a radio for providing various information such as driving information, traffic information, and entertainment information, and one or more ECUs for controlling these devices. The information service unit 2012 provides various multimedia information and multimedia services to an occupant of the vehicle 1 by using information acquired from an external device through a communication module 2013 and the like.

A driver support system unit 2030 comprises various devices such as a millimeter wave radar, a light detection and ranging (LiDAR), a camera, a positioning locator (for example, GNSS), map information (for example, high-definition (HD) maps, autonomous vehicle (AV) maps, and the like), a gyroscopic system (for example, an inertial measurement unit (IMU), an inertial navigation system (INS), and the like), an artificial intelligence (AI) chip, and an AI processor for providing functions to prevent accidents or reduce a driving load of a driver, and one or more ECUs for controlling these devices. Further, the driver support system unit 2030 transmits and receives various kinds of information through the communication module 2013 to realize a driver support function or an automatic driving function.

The communication module 2013 can communicate with the microprocessor 2031 and components of the vehicle 1 through a communication port. For example, the communication module 2013 transmits and receives data through the communication port 2033 to and from the drive 2002, steering 2003, accelerator pedal 2004, brake pedal 2005, shift lever 2006, left and right front wheels 2007, left and right rear wheels 2008, axle 2009, microprocessor 2031 in the electronic control 2010, memory (ROM, RAM) 2032, and sensor 2021 to 2028.

The communication module 2013 is a communication device that can be controlled by the microprocessor 2031 of the electronic controller 2010 and can communicate with an external device. For example, The communication module 2013 transmits and receives various kinds of information via radio communication with the external device. The communication module 2013 may be placed inside or outside the electronic control unit 2010. Examples of the external device may include a base station, a mobile station, and the like.

The communication module 2013 transmits a current signal coming from a current sensor and input to the electronic controller 2010 to an external device via radio communication. Further, the communication module 2013 transmits a rotation speed signal of a front wheel and a rear wheel acquired by the speed sensor 2022, a pressure signal of a front wheel and a rear wheel acquired by an air pressure sensor 2023, a speed signal of a vehicle acquired by a speed sensor 2024, an acceleration signal acquired by an acceleration sensor 2025, an accelerator pedal pressed-amount signal acquired by an accelerator pedal sensor 2029, a brake pedal pressed-amount signal acquired by a brake pedal sensor 2026, an operation signal of the shift lever acquired by a shift lever sensor 2027, and a detection signal acquired by an object detection sensor 2028 for detecting obstacles, vehicles, pedestrians, and the like input to the electronic controller 2010 to an external device via radio communication.

The communication module 2013 receives various information (traffic information, signal information, inter-vehicle information, and the like.) transmitted from the external device and displays on the information service unit 2012 provided in the vehicle. Further, the communication module 2013 stores various information received from the external device in a memory 2032 usable by the microprocessor 2031. Based on the information stored in the memory 2032, the microprocessor 2031 may control the drive 2002, the steering 2003, the accelerator pedal 2004, the brake pedal 2005, the shift lever 2006, the left and right front wheels 2007, the left and right rear wheels 2008, the axle 2009, the sensors 2021 to 2028, and the like. provided in the vehicle 2001.

Although the present disclosure has been described in detail above, it will be obvious to those skilled in the art that the present disclosure is not limited to the embodiments described in the present disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### REFERENCE SIGNS LIST

- 10: Radio communication system
- 20: NG-RAN
- 100: gNB
- 200: UE
- 210: Radio signal transmission and reception unit
- 220: Amplifier unit
- 230: Modulation and demodulation unit
- 240: Control signal and reference signal processing unit
- 250: Encoding/decoding unit
- 260: Data transmission and reception unit
- 270: Control unit
- 1001: Processor
- 1002: Memory
- 1003: Storage
- 1004: Communication device
- 1005: Input device
- 1006: Output device
- 1007: Bus
- 2001: Vehicles
- 2002: Drive unit
- 2003: Steering unit
- 2004: Axel pedal
- 2005: Brake pedal
- 2006: Shift lever
- 2007: Left and right front wheels
- 2008: Right and left rear wheels
- 2009: Axles
- 2010: Electronic control unit
- 2012: Information service unit
- 2013: Communication module
- 2021: Current sensor
- 2022: Rotation speed sensor
- 2023: Pneumatic pressure sensor
- 2024: Vehicle speed sensor
- 2025: Acceleration sensor
- 2026: Brake pedal sensor
- 2027: Shift lever sensor
- 2028: Object detection sensor
- 2029: Accelerator pedal sensor
- 2030: Operation support system unit
- 2031: Microprocessor
- 2032: Memory (ROM, RAM)
- 2033: Communication port

## Claims

1. A terminal comprising:
a reception unit that receives a plurality of downlink data channels scheduled by a single downlink control information, and
a control unit that assumes that the downlink data channel cancelled due to the collision is excluded from a specified scheduling target when any of the downlink data channels collides with an uplink symbol.

2. A terminal comprising:
a reception unit that receives a plurality of downlink data channels scheduled by a single downlink control information, and
a control unit that determines the presence or absence of information related to a code block group based on the scheduled downlink data channels or the valid downlink data channels.

3. A terminal comprising:
a reception unit that receives a plurality of downlink data channels scheduled by a single downlink control information, and
a control unit that determines a codebook including a feedback of an automatic retransmission request of the downlink data channels based on the number of the valid downlink data channels.

4. A terminal comprising:
a reception unit that receives a plurality of downlink data channels scheduled by a single downlink control information, and
a control unit that assumes reception of the downlink data channels by a semi-static scheduling cancelled due to the collision when any of the downlink data channels collides with an uplink symbol.

5. A radio communication system comprising a radio base station and a terminal,
wherein the radio base station includes a transmission unit that transmits a plurality of downlink data channels scheduled by a single downlink control information,
wherein the terminal includes:
a reception unit that receives the downlink data channels; and
a control unit that assumes that the downlink data channel canceled due to the collision is excluded from a specified scheduling target when any of the downlink data channels collides with an uplink symbol.

6. A radio communication method comprising:
a step of transmitting a plurality of downlink data channels scheduled by a single downlink control information, by a radio base station,
a step of receiving the downlink data channels by a terminal, and
a step of assuming that the downlink data channel canceled due to the collision is excluded from a specified scheduling target when any of the downlink data channels collides with an uplink symbol.
